(19) Europäisches Patentamt
European Patent Office
Office européen des brevets

(11) EP 4 756 368 A1

(12) EUROPEAN PATENT APPLICATION
published in accordance with Art. 153(4) EPC

(43) Date of publication:
10.06.2026 Bulletin 2026/24

(51) International Patent Classification (IPC):
G01C 15/00 (2006.01)

(21) Application number: 23947287.1

(22) Date of filing: 18.10.2023

(86) International application number:
PCT/CN2023/125155

(87) International publication number:
WO 2025/025348 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.07.2023 CN 202310946899

(71) Applicants:
• Qinnav Technology Ltd.
Jiading District
Shanghai 201801 (CN)

• Comnav Technology Ltd.
Shanghai 201801 (CN)

(72) Inventors:
• WANG, Yunpeng
Shanghai 201801 (CN)
• FENG, Yi
Shanghai 201801 (CN)
• ZHANG, Meng
Shanghai 201801 (CN)
• ZHANG, Lu
Shanghai 201801 (CN)

(74) Representative: De Vries & Metman
Overschiestraat 180
1062 XK Amsterdam (NL)

(54) LOFTING METHOD, MULTIFUNCTIONAL MEASUREMENT APPARATUS AND COMPUTER-READABLE MEDIUM

(57) A lofting method, a multifunctional measurement apparatus and a computer-readable medium. The lofting method is used for a multifunctional measurement apparatus (500). The multifunctional measurement apparatus (500) includes a navigation module (1, 501) and a laser ranging module (2, 502), wherein the navigation module (1, 501) includes an inertial measurement unit. The lofting method includes: calculating plane projection coordinates of a laser irradiation point in a first coordinate system (S101); acquiring plane projection coordinates of a point to be lofted in the first coordinate system (S102); calculating a lofting error in a second coordinate system on the basis of the obtained coordinates (S103); and adjusting the position of the laser irradiation point on the basis of the lofting error until the laser irradiation point coincides with the point to be lofted within a lofting error range (S104). In the lofting method, a laser ranging module (2, 502) is used instead of a centering rod, so that a user can carry a multifunctional measurement apparatus and operate same conveniently, and it is only necessary to move a laser irradiation point in situ to implement long-distance lofting.

```
┌────────────────────────────────────────┐
│ Calculate plane projection coordinates  │──── S101
│ L_NE of a laser irradiation point in a  │
│ first coordinate system                 │
└────────────────────────────────────────┘
                    │
                    ▼
┌────────────────────────────────────────┐
│ Acquire plane projection coordinates    │──── S102
│ T_NE of a point to be lofted in the     │
│ first coordinate system                 │
└────────────────────────────────────────┘
                    │
                    ▼
┌────────────────────────────────────────┐
│ Calculate a lofting error in a second   │──── S103
│ coordinate system on the basis of the   │
│ coordinates L_NE and the coordinates    │
│ T_NE                                    │
└────────────────────────────────────────┘
                    │
                    ▼
┌────────────────────────────────────────┐
│ Within a laser irradiation range,       │──── S104
│ adjust the position of the laser        │
│ irradiation point on the basis of the   │
│ lofting error until the laser           │
│ irradiation point coincides with the    │
│ point to be lofted within a preset      │
│ lofting error range                     │
└────────────────────────────────────────┘
```

FIG. 1

**Description**

**TECHNICAL FIELD**

The present disclosure relates to a stakeout method, a multifunctional measurement apparatus, and a computer-readable medium.

**BACKGROUND**

In the field of engineering surveying, construction stakeout refers to the process of marking the point coordinates shown on design drawings or the coordinates of other known points in an actual working environment. An inertial navigation RTK (Real-Time Kinematic) receiver occupies an irreplaceable position in construction stakeout applications, and products of this type currently available in both domestic and international markets need to be used in conjunction with a centering rod. During operation of the existing centering rod, it is necessary to align the tip at the lower end of the centering rod with the target point to be measured. Therefore, the user must walk to the vicinity of the target point, resulting in low work efficiency. Moreover, due to the limited length of the centering rod, stakeout requirements cannot be satisfied in many operating scenarios in which physical contact with the centering rod is inconvenient or impossible. For example, when a target point is located at a cliff edge or in other special positions.

**SUMMARY**

The present disclosure aims to provide a stakeout method, a multifunctional measurement apparatus, and a computer-readable medium, wherein by using a laser distance measuring module to replace the centering rod, the multifunctional measurement apparatus can be carried and operated conveniently, and long-distance stakeout can be achieved merely by moving a laser irradiation point in place.

At least one embodiment of the present disclosure provides a stakeout method for a multifunctional measurement apparatus, wherein the multifunctional measurement apparatus includes a navigation module and a laser distance measuring module, and the navigation module includes an inertial measuring unit, wherein the stakeout method includes: calculating a projection coordinate $L_{NE}$ of a laser irradiation point in a first coordinate system; obtaining a projection coordinate $T_{NE}$ of a point to be staked out in the first coordinate system; calculating a stakeout error in a second coordinate system based on the coordinate $L_{NE}$ and the coordinate $T_{NE}$; within a laser irradiation range, adjusting a position of the laser irradiation point according to the stakeout error until a distance between the laser irradiation point and the point to be staked out coincides within a preset stakeout error range.

In at least one embodiment provided by the present disclosure, before the step of calculating the stakeout error in the second coordinate system, the method further includes initializing parameters of the multifunctional measurement apparatus.

In at least one embodiment provided by the present disclosure, the step of initializing the parameters of the multifunctional measurement apparatus includes: selecting any fixed point in an environment where the multifunctional measurement apparatus is located; irradiating the fixed point with laser emitted by the laser distance measuring module at any tilt angle, any rotation angle, and/or any distance, and performing N laser measurement operations to achieve initialization of the parameters, wherein N is a positive integer greater than 1.

In at least one embodiment provided by the present disclosure, the navigation module further includes a GNSS positioning unit, and the step of calculating the projection coordinate of the laser irradiation point in the first coordinate system includes: obtaining a projection vector $r_{GNSS}^{n}$ of a position vector of an antenna phase center in the first coordinate system by the GNSS positioning unit; calculating a projection vector $l_{L}^{b}$ of a coordinate vector from a center of the inertial measuring unit to the laser irradiation point in a third coordinate system; obtaining a projection vector $l_{GNSS}^{b}$ of a coordinate vector from the center of the inertial measuring unit to the antenna phase center in the third coordinate system; calculating the projection coordinate $L_{NE}$ with the following formula: $L_{NE} = \left( r_{GNSS}^{n} + C_{b}^{n} \left( l_{L}^{b} - l_{GNSS}^{b} \right) \right)_{NE}$, wherein $C_{b}^{n}$ represents a coordinate transformation matrix from the first coordinate system to the third coordinate system; wherein an origin of the first coordinate system is located at the center of the inertial measuring unit, an x-axis is parallel to a local horizontal plane and points toward a geographic north direction, a y-axis is parallel to the local horizontal plane and points toward a geographic east direction, and the z-axis, the x-axis and the y-axis form a right-handed coordinate system;

an origin of the third coordinate system is located at the center of the inertial measuring unit, an x-axis is perpendicular to a panel of the multifunctional measurement apparatus and points inward, a y-axis is perpendicular to the x-axis and points toward a right side of the multifunctional measurement apparatus, and the z-axis, the x-axis and the y-axis form a right-handed coordinate system.

In at least one embodiment provided by the present disclosure, the step of calculating the projection $\boldsymbol{l}_L^b$ of the coordinate vector from the center of the inertial measuring unit to the laser irradiation point in the third coordinate system includes: obtaining a projection vector l' of a coordinate vector from the center of the inertial measuring unit to a laser emission point in the third coordinate system; obtaining a distance from the laser emission point to the laser irradiation point by the laser distance measuring module; adding the projection vector l' to the distance from the laser emission point to the laser irradiation point to obtain the projection vector $\boldsymbol{l}_L^b$ of the coordinate vector from the center of the inertial measuring unit to the laser irradiation point in the third coordinate system.

In at least one embodiment provided by the present disclosure, the step of calculating the stakeout error in the second coordinate system includes: calculating a heading angle of a user viewing direction; calculating a heading angle of a coordinate vector from the laser irradiation point to the point to be staked out; establishing the second coordinate system, and calculating the stakeout error in the second coordinate system based on the heading angle of the user viewing direction and the heading angle of the coordinate vector from the laser irradiation point to the point to be staked out, wherein an origin of the second coordinate system is the laser irradiation point, a positive direction of an x-axis coincides with the user viewing direction, and a y-axis is perpendicular to the x-axis to form a right-handed coordinate system.

In at least one embodiment provided by the present disclosure, the step of calculating the heading angle of the user viewing direction includes: adding a heading angle of the multifunctional measurement apparatus, which is obtained in real time by the navigation module, to a fixed deviation between the user viewing direction and a heading direction of the multifunctional measurement apparatus, to obtain the heading angle of the user viewing direction.

In at least one embodiment provided by the present disclosure, the step of calculating the heading angle of the coordinate vector from the laser irradiation point to the point to be staked out includes: calculating the heading angle $\phi_1$ of the coordinate vector from the laser irradiation point to the point to be staked out with the following formula:

$$\varphi_1 = arctan\left(\frac{T_E - L_E}{T_N - L_N}\right)$$, wherein T represents the point to be staked out, L represents the laser irradiation point, the subscript E represents a coordinate component in the geographic east direction, and the subscript N represents a coordinate component in the geographic north direction.

In at least one embodiment provided by the present disclosure, the step of calculating the stakeout error in the second coordinate system includes: calculating the stakeout error in the second coordinate system with the following formulas: $\Delta F = \overrightarrow{LT} \cdot cos(\Delta\varphi)$, $\Delta R = \overrightarrow{LT} \cdot sin(\Delta\varphi)$, wherein $\Delta\varphi = \varphi_1 - \varphi_0$, $\overrightarrow{LT}$ represents the coordinate vector from the laser irradiation point to the point to be staked out, $\varphi_1$ represents the heading angle of the coordinate vector from the laser irradiation point to the point to be staked out, and $\varphi_0$ represents the heading angle of the user viewing direction.

At least one embodiment of the present disclosure further provides a multifunctional measurement apparatus, configured to implement the stakeout method provided by at least one embodiment of the present disclosure, wherein the multifunctional measurement apparatus includes a navigation module, a laser distance measuring module, and a calculation module, the calculation module is configured to calculate a projection coordinate $L_{NE}$ of a laser irradiation point in a first coordinate system; obtain a projection coordinate $T_{NE}$ of a point to be staked out in the first coordinate system; and calculate a stakeout error in a second coordinate system based on the coordinate $L_{NE}$ and the coordinate $T_{NE}$.

At least one embodiment of the present disclosure further provides a computer-readable medium storing executable instructions, when the instructions are executed by one or more processors, the following steps of the method according to at least one embodiment of the present disclosure are performed: calculating a projection coordinate $L_{NE}$ of a laser irradiation point in a first coordinate system; obtaining a projection coordinate $T_{NE}$ of a point to be staked out in the first coordinate system; and calculating a stakeout error in a second coordinate system based on the coordinate $L_{NE}$ and the coordinate $T_{NE}$.

It should be understood that the above general description and the following detailed description are merely exemplary and explanatory, and do not limit the present disclosure.

The stakeout method, the multifunctional measurement apparatus, and the computer-readable medium of the present disclosure provide the following beneficial effects:

The stakeout method uses a laser distance measuring module to replace a centering rod, so that the operating radius of the multifunctional measurement apparatus can reach several tens of meters. Within the operating range of the multifunctional measurement apparatus, the user does not need to move forward, backward, or sideways, and can quickly locate a point to be staked out merely by moving the laser irradiation point in place. Moreover, the structure of the multifunctional measurement apparatus equipped with the laser distance measuring module is compact and lightweight, allowing the user to carry it and perform operations conveniently.

BRIEF DESCRIPTION OF THE DRAWINGS

By reading the following detailed description of non-limiting embodiments with reference to the accompanying drawings, other features, objectives, and advantages of the present disclosure will become more apparent.

FIG. 1 is a schematic flowchart of the stakeout method provided by at least one embodiment of the present disclosure.
FIG. 2 is a diagram of an example of a multifunctional measurement apparatus provided by at least one embodiment of the present disclosure.
FIG. 3 is a diagram illustrating the initialization process of the heading angle of the multifunctional measurement apparatus.
FIG. 4 is a diagram of the process of calculating stakeout error in a second coordinate system provided by at least one embodiment of the present disclosure.
FIG. 5 is a block diagram of the multifunctional measurement apparatus provided by at least one embodiment of the present disclosure.

DETAILED DESCRIPTION

In order to make objectives, technical details and advantages of the embodiments of the present disclosure apparent, the technical solutions of the embodiment will be described in a clear and fully understandable way in connection with the drawings related to the embodiments of the present disclosure. It is obvious that the embodiments described are just a part but not all of the embodiments of the present disclosure. Based on the embodiments described herein, other embodiment(s) which can be acquired by those ordinarily skilled in the art without any inventive labor should be within the scope of the present disclosure.

Unless otherwise defined, the technical or scientific terms used in this present disclosure shall have the meanings generally understood by a person of ordinary skill in the relevant field. The terms "first", "second" and similar expressions used herein do not indicate any order, quantity, or importance, but are merely used to distinguish different components. Similarly, terms such as "a", "an" or "the" do not imply a limitation in quantity but rather indicate the presence of at least one. The terms "comprise", "include" and similar expressions are intended to mean that the elements or objects listed before such terms encompass those listed after them and their equivalents, without excluding other elements or objects. The terms "connect" or "couple" and similar expressions are not limited to physical or mechanical connections but may also include electrical connections, whether direct or indirect.

To solve the above technical problems, at least one embodiment of the present disclosure provides a stakeout method for a multifunctional measurement apparatus. The multifunctional measurement apparatus includes a navigation module and a laser distance measuring module, and the navigation module includes an inertial measuring unit. The stakeout method includes: calculating a projection coordinate $L_{NE}$ of a laser irradiation point in a first coordinate system; obtaining a projection coordinate $T_{NE}$ of a point to be staked out in the first coordinate system; calculating a stakeout error in a second coordinate system based on the coordinate $L_{NE}$ and the coordinate $T_{NE}$; within a laser irradiation range, adjusting a position of the laser irradiation point according to the stakeout error until a distance between the laser irradiation point and the point to be staked out coincides within a preset stakeout error range.

The stakeout method uses a laser distance measuring module to replace a centering rod, so that the operating radius of the multifunctional measurement apparatus can reach several tens of meters. Within the operating range of the multifunctional measurement apparatus, the user does not need to move forward, backward, or sideways, and can quickly locate a point to be staked out merely by moving the laser irradiation point in place. Moreover, the structure of the multifunctional measurement apparatus equipped with the laser distance measuring module is compact and lightweight, allowing the user to carry it and perform operations conveniently.

At least one embodiment of the present disclosure further provides a multifunctional measurement apparatus, configured to implement the above stakeout method.

The embodiments of the present disclosure are described in detail below with reference to the accompanying drawings. However, the present disclosure is not limited to these specific embodiments.

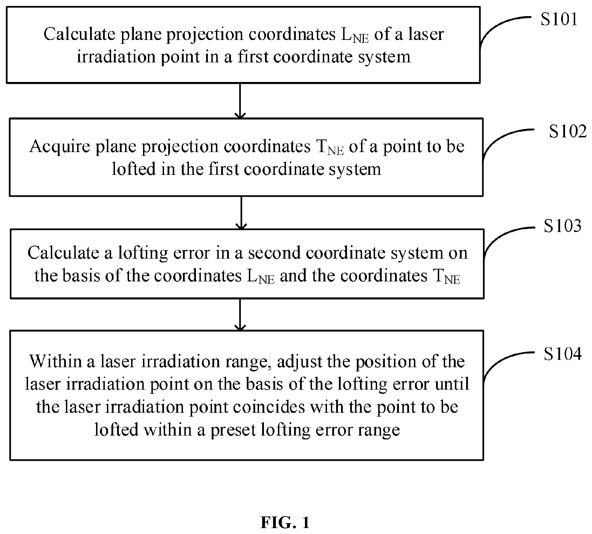

FIG. 1 is a schematic flowchart of the stakeout method provided by at least one embodiment of the present disclosure.

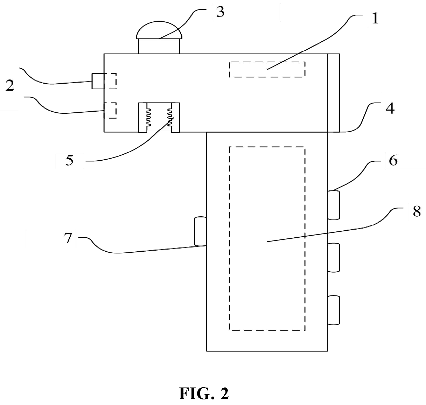

In some embodiments, the stakeout method is used for a multifunctional measurement apparatus. For example, the multifunctional measurement apparatus may be an RTK receiver. An example structure of the multifunctional measurement apparatus is illustrated in FIG. 2.

As shown in FIG. 2, the multifunctional measurement apparatus includes a navigation module 1, a laser distance measuring module 2, an antenna 3, a screen 4, a thread 5, an input keyboard 6, a key 7, and a battery 8.

The navigation module 1 mainly includes an inertial measuring unit, a GNSS (Global Navigation Satellite System) positioning unit, and a Kalman filter. The GNSS positioning unit is capable of acquiring high-precision position information of the multifunctional measurement apparatus. The Kalman filter is capable of fusing the position information with angular rate and specific force information from the inertial measuring unit, to obtain high-frequency position and attitude information of the inertial measuring unit. The antenna 3 is used to cooperate with the navigation module 1 to transmit data outward and receive data. The screen 4 is used to display stakeout error of the laser irradiation point and the point to be staked out in the second coordinate system, so as to guide the user's operations. The screen 4 is further used to display data collected by the navigation module 1 and the laser distance measuring module 2, as well as calculation results of the multifunctional measurement apparatus. The thread 5 is used to fasten the centering rod, and is compatible with the usage mode of conventional centering rods. The input keyboard 6 is used for users to input instructions, coordinates, and other information. The key 7 is the trigger key for laser emission. The battery 8 is used to supply power to the entire multifunctional measurement apparatus.

The laser distance measuring module 2 is installed at the front end of the multifunctional measurement apparatus and includes a single-line laser distance meter and a CPU (Central Processing Unit). The laser distance meter emits the laser to a point in space. By obtaining the phase observations and processing them with the CPU, the distance between the point and the laser emission point can be obtained.

The composition and structure of each component shown in FIG. 2 are for illustrative purposes only and do not limit the scope of protection of the present disclosure.

As shown in FIG. 1, the stakeout method includes the following steps S101 to S104.

Step S101: Calculate the projection coordinate $L_{NE}$ of the laser irradiation point in the first coordinate system.

For example, the origin of the first coordinate system is located at the center of the inertial measuring unit. The x-axis is parallel to the local horizontal plane and points toward the geographic north. The y-axis is parallel to the local horizontal plane and points toward the geographic east. The z-axis, the x-axis and the y-axis form a right-handed coordinate system.

Step S102: Obtain the projection coordinate $T_{NE}$ of the point to be staked out in the first coordinate system.

For example, the projection coordinate of the point to be staked out can be manually input by the input keyboard, or the point to be staked out can be selected from a point database, and the projection coordinate of the point to be staked out is transmitted to the multifunctional measurement apparatus, for example, via communication means such as Bluetooth or Wi-Fi.

Step S103: Calculate the stakeout error in the second coordinate system based on the coordinate $L_{NE}$ and the coordinate $T_{NE}$.

Here, the second coordinate system refers to the perspective of the user operating the multifunctional measurement apparatus to perform the stakeout operation.

Step S104: Within the laser irradiation range, adjusting the position of the laser irradiation point according to the stakeout error until the distance between the laser irradiation point and the point to be staked out coincides within the preset stakeout error range. Specifically, the stakeout error calculated in Step S103 can be displayed on the screen, and the user can adjust the position of the laser irradiation point by referring to the displayed results. For example, the adjustment can be achieved by moving the multifunctional measurement apparatus, rotating the multifunctional measurement apparatus, tilting the multifunctional measurement apparatus, or other similar methods.

For example, in some embodiments of the present disclosure, before Step S103, the stakeout method further includes initializing the parameters of the multifunctional measurement apparatus.

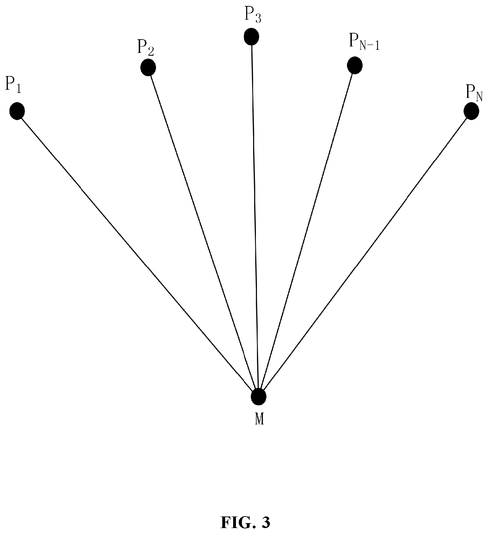

The parameter initialization process can refer to FIG. 3 and mainly includes the following steps:

Step 1: Randomly select a fixed point in the environment (the environment where the point to be staked out is located), for example, a point on a wall, such as point M shown in FIG. 3. To facilitate identification, the point may be marked (marking is not necessary).

Step 2: Hold the multifunctional measurement apparatus at any tilt angle, any rotation angle, and any distance, and emit the laser from the laser distance measuring module to the fixed point to perform a laser measurement operation. After moving the position of the laser emission point, perform the next laser measurement operation. After performing N laser measurement operations, the parameters are initialized, where N is a positive integer greater than 1. For example, laser emission points at different positions are illustrated as points $P_1$, $P_2$, $P_3$, $P_{N-1}$, and $P_N$ in FIG. 3.

For example, the navigation module includes a satellite navigation system (GNSS, at least including a GNSS positioning unit) and an inertial navigation system (INS, at least including an inertial measuring unit). The parameters of the multifunctional measurement apparatus can be obtained in real time through fusion computation of GNSS and INS. By fusing the laser observation data with the navigation module, the parameter initialization process of the multifunctional measurement apparatus can be rapidly completed.

It should be noted that the parameter initialization of the multifunctional measurement apparatus using the laser distance measuring module is not limited to the laser measurement method. The initialization can also be performed by the centering rod.

For example, in some embodiments of the present disclosure, the navigation module includes the GNSS positioning unit, and Step S101 may include the following steps S111 to S114.

Step S111: The GNSS positioning unit obtains the projection vector $r_{GNSS}^n$ of the position vector of the antenna phase center in the first coordinate system.

Step S112: Calculate the projection vector $l_L^b$ of the coordinate vector from the center of the inertial measuring unit to the laser irradiation point in the third coordinate system.

For example, the origin of the third coordinate system is located at the center of the inertial measuring unit. The x-axis is perpendicular to a panel of the multifunctional measurement apparatus and points inward. The y-axis is perpendicular to the x-axis and points toward a right side of the multifunctional measurement apparatus. The z-axis, the x-axis and the y-axis form a right-handed coordinate system.

For example, in some embodiments of the present disclosure, Step S112 may include: obtaining the projection vector l' of the coordinate vector from the center of the inertial measuring unit to the laser emission point in the third coordinate system; obtaining the distance from the laser emission point to the laser irradiation point by the laser distance measuring module; adding the projection vector l' to the distance from the laser emission point to the laser irradiation point to obtain the projection vector $l_L^b$ of the coordinate vector from the center of the inertial measuring unit to the laser irradiation point in the third coordinate system.

For example, the projection vector l' can be obtained either by actual measurement or from the structural design drawings of the multifunctional measurement apparatus.

Step S113: Obtain the projection vector $l_{GNSS}^b$ of the coordinate vector from the center of the inertial measuring unit to the antenna phase center in the third coordinate system.

For example, the projection vector $l_{GNSS}^b$ can be obtained either by actual measurement or from the structural design drawings of the multifunctional measurement apparatus.

Step S114: Calculate the projection coordinate $L_{NE}$ with the following formula:

$$L_{NE} = \left( r_{GNSS}^n + C_b^n \left( l_L^b - l_{GNSS}^b \right) \right)_{NE}.$$

Here, $C_b^n$ represents the coordinate transformation matrix from the first coordinate system to the third coordinate system. Furthermore,

$$C_b^n = \begin{pmatrix} c\theta c\varphi & -c\phi s\varphi + s\phi s\theta c\varphi & s\phi s\varphi + c\phi s\theta c\varphi \\ c\theta s\varphi & c\phi c\varphi + s\phi s\theta s\varphi & -s\phi c\varphi + c\phi s\theta c\varphi \\ -s\theta & s\phi c\theta & c\phi c\theta \end{pmatrix}.$$

In this formula, c represents cos(), s represents sin(), $\theta$ represents the pitch angle of the multifunctional measurement apparatus, $\phi$ represents the roll angle of the multifunctional measurement apparatus, and $\varphi$ represents the heading angle of the multifunctional measurement apparatus.

For example, in some embodiments of the present disclosure, Step S103 may include: calculating a heading angle of a user viewing direction; calculating a heading angle of a coordinate vector from the laser irradiation point to the point to be staked out; establishing the second coordinate system, and calculating the stakeout error in the second coordinate system.

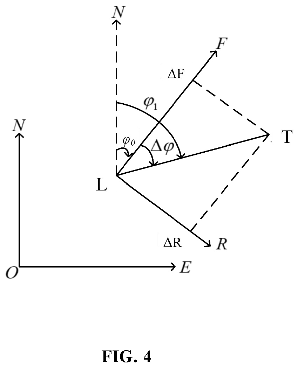

The process of calculating the stakeout error in the second coordinate system is illustrated with reference to FIG. 4. As shown in FIG. 4, L represents the laser irradiation point, and T represents the point to be staked out. The LF direction represents the user viewing direction, which can also indicate the laser beam direction. The F-L-R represents the second coordinate system established with the laser irradiation point as the origin. The L-F axis coincides with the positive user viewing direction, and the L-R axis is perpendicular to L-F to form a right-hand coordinate system. The stakeout error in the second coordinate system and the representation of the stakeout operations are more intuitive. $\varphi_0$ represents the heading angle of the user viewing direction, $\overrightarrow{LT}$ represents the coordinate vector from the laser irradiation point to the point to be staked out, $\varphi_1$ represents the heading angle of the coordinate vector $\overrightarrow{LT}$, and $\Delta F$ and $\Delta R$ represent the stakeout error in the second coordinate system.

For example, in some embodiments of the present disclosure, calculating the heading angle $\varphi_0$ of the user

viewing direction includes: adding a heading angle of the multifunctional measurement apparatus, which is obtained in real time by the navigation module, to a fixed deviation between the user viewing direction and a heading direction of the multifunctional measurement apparatus, to obtain the heading angle of the user viewing direction.

For example, $\varphi$ represents the heading angle of the multifunctional measurement apparatus obtained in real time by the navigation module, $\delta\varphi$ represents the fixed deviation between the direction of a user viewing and the heading direction of the multifunctional measurement apparatus, and the heading angle $\varphi 0$ of the direction of a user viewing is given by: $\varphi_o = \varphi + \delta\varphi$.

For example, in some embodiments of the present disclosure, the step of calculating the heading angle $\varphi_1$ of the coordinate vector $\overrightarrow{LT}$ from the laser irradiation point to the point to be staked out may include: calculating the heading angle $\phi_1$ of the coordinate vector from the laser irradiation point to the point to be staked out with the following formula:

$$\varphi_1 = arctan\left(\frac{T_E - L_E}{T_N - L_N}\right).$$

Here, arctan() represents the inverse tangent function. The subscript E represents the coordinate component in the geographic east direction. The subscript N represents a coordinate component in the geographic north direction.

For example, in some embodiments of the present disclosure, the step of calculating the stakeout error in the second coordinate system may include: calculating the stakeout error in the second coordinate system with the following formulas:

$$\Delta F = \overrightarrow{LT} \cdot cos(\Delta\varphi), \quad \Delta R = \overrightarrow{LT} \cdot sin(\Delta\varphi).$$

Here, $\Delta\varphi = \varphi_1 - \varphi_0$.

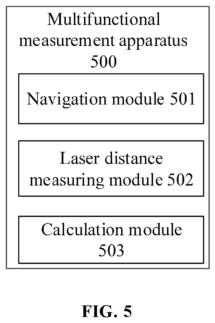

FIG. 5 illustrates a multifunctional measurement apparatus 500 provided according to at least one embodiment of the present disclosure.

As shown in FIG. 5, the multifunctional measurement apparatus 500 may include a navigation module 501, a laser distance measuring module 502, and a calculation module 503.

The calculation module 503 is configured to calculate the projection coordinate $L_{NE}$ of the laser irradiation point in the first coordinate system; obtain the projection coordinate $T_{NE}$ of the point to be staked out in the first coordinate system; and calculate the stakeout error in the second coordinate system based on the coordinate $L_{NE}$ and the coordinate $T_{NE}$.

For example, the multifunctional measurement apparatus 500 may be implemented using hardware, software, firmware, or any feasible combination thereof, and the present disclosure is not limited in this regard.

The functions of the respective modules in the multifunctional measurement apparatus 500 may be implemented by using the specific implementation manners of the corresponding steps in the above-described stakeout method, and details thereof are not repeated herein.

The technical effects of the multifunctional measurement apparatus 500 are the same as those of the above-described stakeout method, and details thereof are not repeated herein.

Several points below need to be explained:

(1) The drawings of the embodiments of the present disclosure relate only to the structures involved in the embodiments of the present disclosure, and normal designs may be referred to for other structures.

(2) In case of no conflict, the embodiments of the present disclosure and the features in the embodiments may be combined with each other to obtain a new embodiment.

The above are only specific embodiments of the present disclosure, but the scope of the embodiment of the present disclosure is not limited thereto, and the scope of the present disclosure should be the scope of the following claims.

## Claims

1. A stakeout method for a multifunctional measurement apparatus, wherein the multifunctional measurement apparatus comprises a navigation module and a laser distance measuring module, and the navigation module comprises an inertial measuring unit, wherein the stakeout method comprises:

calculating a projection coordinate $L_{NE}$ of a laser irradiation point in a first coordinate system;

obtaining a projection coordinate $T_{NE}$ of a point to be staked out in the first coordinate system;

calculating a stakeout error in a second coordinate system based on the coordinate $L_{NE}$ and the coordinate $T_{NE}$;

within a laser irradiation range, adjusting a position of the laser irradiation point according to the stakeout error until a distance between the laser irradiation point and the point to be staked out coincides within a preset stakeout error range.

2. The stakeout method according to claim 1, wherein before the step of calculating the stakeout error in the second coordinate system, the method further comprises initializing parameters of the multifunctional measurement apparatus.

3. The stakeout method according to claim 2, wherein the step of initializing the parameters of the multifunctional measurement apparatus comprises:

selecting any fixed point in an environment where the multifunctional measurement apparatus is located;

irradiating the fixed point with laser emitted by the laser distance measuring module at any tilt angle, any rotation angle, and/or any distance, and performing N laser measurement operations to achieve initialization of the parameters,

wherein N is a positive integer greater than 1.

4. The stakeout method according to claim 1, wherein the navigation module further comprises a GNSS positioning unit, and the step of calculating the projection coordinate of the laser irradiation point in the first coordinate system comprises:

obtaining a projection vector $r^n_{GNSS}$ of a position vector of an antenna phase center in the first coordinate system by the GNSS positioning unit;

calculating a projection vector $l^b_L$ of a coordinate vector from a center of the inertial measuring unit to the laser irradiation point in a third coordinate system;

obtaining a projection vector $l^b_{GNSS}$ of a coordinate vector from the center of the inertial measuring unit to the antenna phase center in the third coordinate system;

calculating the projection coordinate $L_{NE}$ with the following formula: $L_{NE} = \left( r^n_{GNSS} + C^n_b \left( l^b_L - l^b_{GNSS} \right) \right)_{NE}$ ,

wherein $C^n_b$ represents a coordinate transformation matrix from the first coordinate system to the third coordinate system;

wherein an origin of the first coordinate system is located at the center of the inertial measuring unit, an x-axis is parallel to a local horizontal plane and points toward a geographic north direction, a y-axis is parallel to the local horizontal plane and points toward a geographic east direction, and the z-axis, the x-axis and the y-axis form a right-handed coordinate system;

an origin of the third coordinate system is located at the center of the inertial measuring unit, an x-axis is perpendicular to a panel of the multifunctional measurement apparatus and points inward, a y-axis is perpendicular to the x-axis and points toward a right side of the multifunctional measurement apparatus, and the z-axis, the x-axis and the y-axis form a right-handed coordinate system.

5. The stakeout method according to claim 4, wherein the step of calculating the projection $l^b_L$ of the coordinate vector from the center of the inertial measuring unit to the laser irradiation point in the third coordinate system comprises:

obtaining a projection vector l' of a coordinate vector from the center of the inertial measuring unit to a laser emission point in the third coordinate system;

obtaining a distance from the laser emission point to the laser irradiation point by the laser distance measuring module;

adding the projection vector l' to the distance from the laser emission point to the laser irradiation point to obtain

the projection vector $\boldsymbol{l}_L^b$ of the coordinate vector from the center of the inertial measuring unit to the laser irradiation point in the third coordinate system.

6. The stakeout method according to claim 1, wherein the step of calculating the stakeout error in the second coordinate system comprises:

calculating a heading angle of a user viewing direction;
calculating a heading angle of a coordinate vector from the laser irradiation point to the point to be staked out;
establishing the second coordinate system, and calculating the stakeout error in the second coordinate system based on the heading angle of the user viewing direction and the heading angle of the coordinate vector from the laser irradiation point to the point to be staked out, wherein an origin of the second coordinate system is the laser irradiation point, a positive direction of an x-axis coincides with the user viewing direction, and a y-axis is perpendicular to the x-axis to form a right-handed coordinate system.

7. The stakeout method according to claim 6, wherein the step of calculating the heading angle of the user viewing direction comprises:
adding a heading angle of the multifunctional measurement apparatus, which is obtained in real time by the navigation module, to a fixed deviation between the user viewing direction and a heading direction of the multifunctional measurement apparatus, to obtain the heading angle of the user viewing direction.

8. The stakeout method according to claim 6, wherein the step of calculating the heading angle of the coordinate vector from the laser irradiation point to the point to be staked out comprises:
calculating the heading angle $\phi_1$ of the coordinate vector from the laser irradiation point to the point to be staked out with the following formula: $\varphi_1 = arctan\left(\dfrac{T_E - L_E}{T_N - L_N}\right)$, wherein T represents the point to be staked out, L represents the laser irradiation point, the subscript E represents a coordinate component in the geographic east direction, and the subscript N represents a coordinate component in the geographic north direction.

9. The stakeout method according to claim 6, wherein the step of calculating the stakeout error in the second coordinate system comprises:
calculating the stakeout error in the second coordinate system with the following formulas: $\Delta F = \overrightarrow{LT} \cdot cos(\Delta\varphi)$, $\Delta R = \overrightarrow{LT} \cdot cos(\Delta\varphi)$, wherein $\Delta\varphi = \varphi_1 - \varphi_0$, $\overrightarrow{LT}$ represents the coordinate vector from the laser irradiation point to the point to be staked out, $\varphi_1$ represents the heading angle of the coordinate vector from the laser irradiation point to the point to be staked out, and $\varphi_0$ represents the heading angle of the user viewing direction.

10. A multifunctional measurement apparatus, configured to implement a stakeout method according to any one of claims 1 to 9, wherein the multifunctional measurement apparatus comprises a navigation module, a laser distance measuring module, and a calculation module, wherein the calculation module is configured to calculate a projection coordinate $L_{NE}$ of a laser irradiation point in a first coordinate system; obtain a projection coordinate $T_{NE}$ of a point to be staked out in the first coordinate system; and calculate a stakeout error in a second coordinate system based on the coordinate $L_{NE}$ and the coordinate $T_{NE}$.

11. A computer-readable medium storing executable instructions, wherein, when the instructions are executed by one or more processors, the following steps of the method according to any one of claims 1 to 9 are performed:

calculating a projection coordinate $L_{NE}$ of a laser irradiation point in a first coordinate system;
obtaining a projection coordinate $T_{NE}$ of a point to be staked out in the first coordinate system;
calculating a stakeout error in a second coordinate system based on the coordinate $L_{NE}$ and the coordinate $T_{NE}$.

Calculate plane projection coordinates $L_{NE}$ of a laser irradiation point in a first coordinate system — S101

Acquire plane projection coordinates $T_{NE}$ of a point to be lofted in the first coordinate system — S102

Calculate a lofting error in a second coordinate system on the basis of the coordinates $L_{NE}$ and the coordinates $T_{NE}$ — S103

Within a laser irradiation range, adjust the position of the laser irradiation point on the basis of the lofting error until the laser irradiation point coincides with the point to be lofted within a preset lofting error range — S104

**FIG. 1**

**FIG. 2**

**FIG. 3**

**FIG. 4**

Multifunctional
measurement apparatus
500

Navigation module 501

Laser distance
measuring module 502

Calculation module
503

**FIG. 5**

**INTERNATIONAL SEARCH REPORT**

| International application No. |
|---|
| **PCT/CN2023/125155** |

| | |
|---|---|
| **A.** | **CLASSIFICATION OF SUBJECT MATTER** |

G01C15/00(2006.01)i

According to International Patent Classification (IPC) or to both national classification and IPC

| | |
|---|---|
| **B.** | **FIELDS SEARCHED** |

Minimum documentation searched (classification system followed by classification symbols)

IPC: G01C15，G01C21，G01C25, G01S

Documentation searched other than minimum documentation to the extent that such documents are included in the fields searched

Electronic data base consulted during the international search (name of data base and, where practicable, search terms used)

CNTXT, ENTXTC, VEN: 放样, 测量, 导航, 惯性测量, 激光测距, 坐标, 误差, 投影, 转换矩阵, 姿态角, 航向角, 俯仰角, 横滚角, 矢量, position+, measur+, inertial, laser distance, coordinat+, error, project+, transition matrix, attitude, heading, pitch, roll, angle, vector

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 105841700 A (SOUTHEAST UNIVERSITY) 10 August 2016 (2016-08-10)<br>description, paragraphs 0004-0122, and figures 1-4 | 1-11 |
| Y | CN 105424024 A (GEZHOUBA EXPLOSIVE CO., LTD.) 23 March 2016 (2016-03-23)<br>description, paragraphs 0033-0057, and figure 1 | 1-11 |
| Y | CN 116026293 A (GUILIN UNIVERSITY OF TECHNOLOGY) 28 April 2023 (2023-04-28)<br>description, paragraphs 0034-0072, and figures 1-4 | 1-11 |
| Y | CN 106092094 A (HOHAI UNIVERSITY et al.) 09 November 2016 (2016-11-09)<br>description, paragraphs 0045-0085, and figures 1-6 | 1-11 |
| Y | RU 2683993 C1 (OBSHCHESTVO S OGRANICHENNOJ OTVETSTVENNOSTYU<br>NEOSFERA) 03 April 2019 (2019-04-03)<br>description, page 11, line 5 to page 17, line 11, and figures 1-5 | 1-11 |
| A | CN 107782335 A (BEIJING AUTOMATION CONTROL EQUIPMENT INSTITUTE) 09<br>March 2018 (2018-03-09)<br>entire document | 1-11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 March 2024** | **29 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/125155**

| Patent document cited in search report | | | Publication date (day/month/year) | Patent family member(s) | Publication date (day/month/year) |
|---|---|---|---|---|---|
| CN | 105841700 | A | 10 August 2016 | None | |
| CN | 105424024 | A | 23 March 2016 | None | |
| CN | 116026293 | A | 28 April 2023 | None | |
| CN | 106092094 | A | 09 November 2016 | None | |
| RU | 2683993 | C1 | 03 April 2019 | None | |
| CN | 107782335 | A | 09 March 2018 | None | |

Form PCT/ISA/210 (patent family annex) (July 2022)